# EUROPEAN PATENT APPLICATION

(11) **EP 3 670 956 A1**
(43) Date of publication of application: **24.06.2020**
(21) Application number: 19218283.0
(22) Date of filing: 19.12.2019
(51) Int. Cl.: F16D 65/12, F16D 55/36, F16D 69/02

(54) **AIRCRAFT BRAKE HEATSINK WEAR LINER**

(30) Priority: 19.12.2018 US 201816226192
(71) Applicant: Goodrich Corporation, Charlotte, NC 28217-4578 (US)
(72) Inventor: LINCK, John, Pueblo, CO 81001 (US)
(74) Representative: Dehns

(57) **Abstract**

A brake stack including a pressure plate (202); an end plate (206); a rotor disk (210) disposed between the pressure plate and the end plate, the rotor disk including a rotor core (230) comprising a carbon-carbon material and a boron-containing component; and a stator disk (212) disposed between the pressure plate and the end plate, the stator disk including a stator core (238) comprising the carbon-carbon material and the boron component. The boron-containing component exhibits a higher heat capacity than a corresponding friction liner that comprises a ceramic matrix composite material, applied by chemical vapor infiltration, and that provides a surface optimized for aircraft brake friction and wear.

## Description

### FIELD

The present disclosure relates generally to aircraft wheel and brake assemblies and, more particularly, to wear liners and heatsinks used in aircraft wheel and brake assemblies.

### BACKGROUND

Aircraft typically utilize brake systems on wheels to slow or stop the aircraft during landings, taxiing and rejected takeoffs. Aircraft brake systems generally employ a brake stack comprising a series of friction disks that may be forced into sliding contact with one another during brake actuation to slow or stop the aircraft. The brake stack typically comprises rotor disks and stator disks that, in response to axial compressive pressure, convert the kinetic energy of the aircraft into heat through frictional forces experienced between the friction disks. Brake stacks may exhibit static and dynamic frictional performance that vary greatly in response to environmental conditions (e.g., ambient temperature or humidity) and to the type of braking operation being performed (*e.g*., short runway take-off, landing or rejected take off). Brake stacks comprising combinations of carbon-carbon and ceramic matrix composite materials may prove advantageous in addressing frictional and wear performance, and related concerns.

### SUMMARY

A brake disk is disclosed. In various embodiments, the brake disk includes a core having a carbon-carbon material and a high specific heat component present in the core in a component range of about ten percent to about thirty percent by volume.

In various embodiments, the brake disk includes a first wear liner and a second wear liner, both the first wear liner and the second wear liner comprising a ceramic matrix composite material. In various embodiments, the core has a core thickness and the first wear liner and the second wear liner have a liner thickness that is less than the core thickness. In various embodiments, the liner thickness is within a thickness range of about ten percent to about fifty percent of the core thickness.

In various embodiments, the high specific heat component is a boron component. In various embodiments, the ceramic matrix composite material comprises a matrix composition having at least one of SiC, B₄C, BN and Si₃N₄. In various embodiments, the boron component present in the core comprises B₄C or other boron or carbon containing compounds. In various embodiments, the brake disk is one of a rotor disk and a stator disk.

A brake stack is disclosed. In various embodiments, the brake stack includes a pressure plate; an end plate; a rotor disk disposed between the pressure plate and the end plate, the rotor disk including a rotor core comprising a carbon-carbon material and a high specific heat component; and a stator disk disposed between the pressure plate and the end plate, the stator disk including a stator core comprising the carbon-carbon material and the specific heat raising component.

In various embodiments, the rotor disk comprises a first rotor wear liner comprising a ceramic matrix composite material and a second rotor wear liner comprising the ceramic composite material. In various embodiments, at least one of the pressure plate and the end plate comprises the ceramic matrix composite material. In various embodiments, the stator disk comprises a first stator wear liner comprising the ceramic composite material and a second stator wear liner comprising the ceramic matrix composite material.

In various embodiments, the high specific heat component is a boron component present in the rotor core and in the stator core in a range of about one percent to about thirty percent by volume. In various embodiments, the boron component comprises boron carbide. In various embodiments, the ceramic matrix composite material comprises a matrix composition having at least one of SiC, B₄C, BN and Si₃N₄. In various embodiments, the at least one of SiC, B₄C, BN and Si₃N₄ is infiltrated into the ceramic matrix composite material using a chemical vapor infiltration process.

A method of forming a brake disk is disclosed. In various embodiments, the method includes the steps of preparing a carbon preform; densifying the carbon preform with a carbon material to form a carbon-carbon core; and infiltrating a high specific heat component into the carbon-carbon core to form a high specific heat carbon-carbon core. In various embodiments, the method further includes attaching a first wear liner and a second wear liner to the high specific heat carbon-carbon core. In various embodiments, the first wear liner and the second wear liner comprise a ceramic matrix composite material. In various embodiments, the high specific heat component is a boron component.

### BRIEF DESCRIPTION OF THE DRAWINGS

The accompanying drawings illustrate various embodiments employing the principles described herein and are a part of the specification. The illustrated embodiments are meant for description and not to limit the scope of the claims.
FIG. 1A illustrates an exemplary aircraft having a brake system, in accordance with various embodiments;
FIG. 1B illustrates a cross-sectional view of a brake assembly, in accordance with various embodiments;
FIG. 2 illustrates a schematic view of a brake stack, in accordance with various embodiments; and
FIG. 3 described a method of forming a brake stack, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

As used herein, a first component that is "radially outward" of a second component means that the first component is positioned at a greater distance away from a common axis than the second component. A first component that is "radially inward" of a second component means that the first component is positioned closer to the common axis than the second component. In the case of components that rotate circumferentially about a common axis, a first component that is radially inward of a second component rotates through a circumferentially shorter path than the second component. As used herein, "distal" refers to the direction outward, or generally, away from a reference component. As used herein, "proximal" and/or "proximate" refer to a direction inward, or generally, towards the reference component. All ranges may include the upper and lower values, and all ranges and ratio limits disclosed herein may be combined. Unless specifically stated otherwise, reference to "a," "an" or "the" may include one or more than one and reference to an item in the singular may also include the item in the plural.

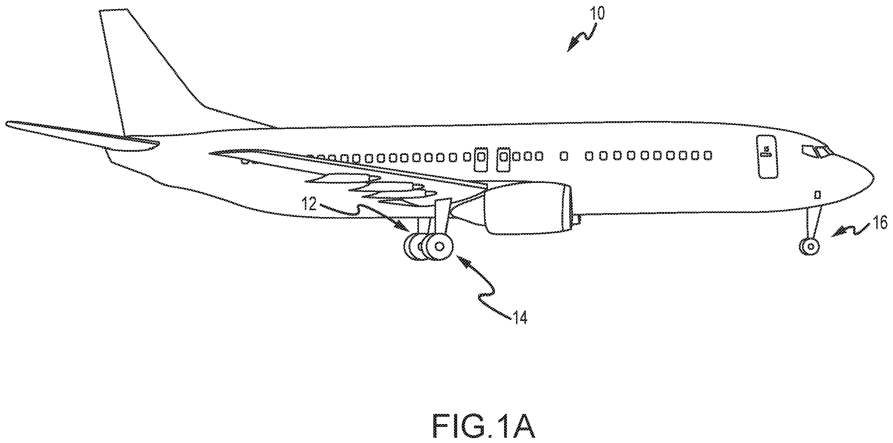

Referring to FIG. 1A, in accordance with various embodiments, an aircraft 10 is illustrated. The aircraft 10 includes landing gear, which may include a left main landing gear 12, a right main landing gear 14 and a nose landing gear 16. The landing gear support the aircraft 10 when it is not flying, allowing the aircraft 10 to taxi, take off and land without damage. While the disclosure refers to the three landing gear configurations just described, the disclosure nevertheless contemplates any number of landing gear configurations.

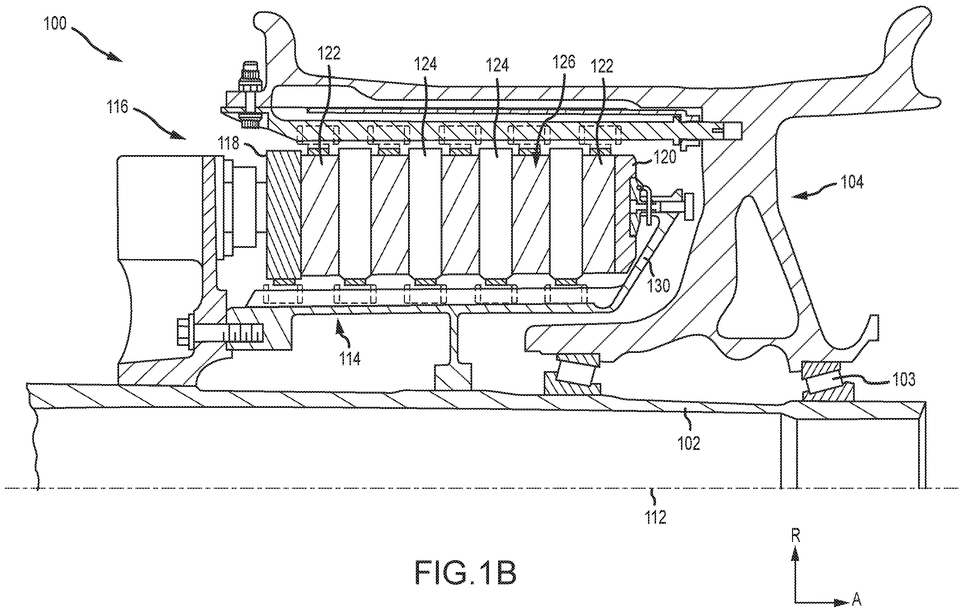

Referring now to FIG. 1B, there is schematically depicted a brake mechanism 100 configured for use on a landing gear, such as, for example, each of the left main landing gear 12 and the right main landing gear 14 described above with reference to FIG. 1A. In various embodiments, the brake mechanism is mounted on an axle 102 for use with a wheel 104 disposed on and configured to rotate about the axle 102 via one or more bearing assemblies 103. A central axis 112 extends through the axle 102 and defines a center of rotation of the wheel 104. A torque plate barrel 114 (sometimes referred to as a torque tube or barrel or a torque plate) is aligned concentrically with the hub 106, and the wheel 104 is rotatable relative to the torque plate barrel 114.

The brake mechanism 100 includes a piston assembly 116, a pressure plate 118 disposed adjacent the piston assembly 116, an end plate 120 positioned a distal location from the piston assembly 116, and a plurality of rotor disks 122 interleaved with a plurality of stator disks 124 positioned intermediate the pressure plate 118 and the end plate 120. The pressure plate 118, the plurality of rotor disks 122, the plurality of stator disks 124 and the end plate 120 together form a brake heat sink or brake stack 126. The pressure plate 118, the end plate 120 and the plurality of stator disks 124 are mounted to the torque plate barrel 114 and remain rotationally stationary relative to the axle 102. The plurality of rotor disks 122 is mounted to the wheel 104 and rotate with respect to each of the pressure plate 118, the end plate 120 and the plurality of stator disks 124.

An actuating mechanism for the brake mechanism 100 includes a plurality of piston assemblies, including the piston assembly 116, circumferentially spaced around a piston housing 156 (only one piston assembly is illustrated in FIG. 1B). Upon actuation, the plurality of piston assemblies affects a braking action by urging the pressure plate 118 and the plurality of stator disks 124 into frictional engagement with the plurality of rotor disks 122 and against the end plate 120. Through compression of the plurality of rotor disks 122 and the plurality of stator disks 124 between the pressure plate 118 and the end plate 120, the resulting frictional contact slows or stops or otherwise prevents rotation of the wheel 104.

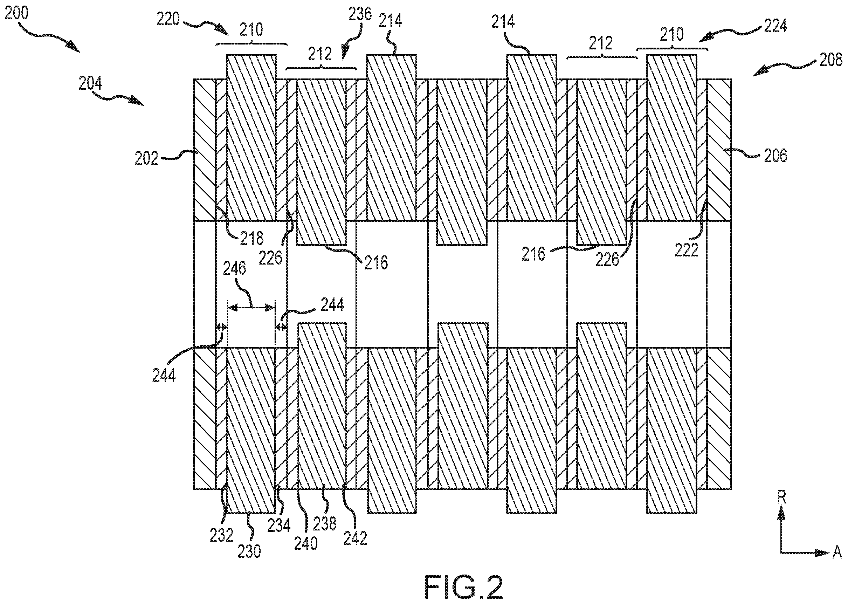

Referring now to FIG. 2, a brake stack 200, such as, for example, the brake stack 126 described above with reference to FIG. 1B, is illustrated, in accordance with various embodiments. The brake stack 200 includes a pressure plate 202 disposed at a first end 204 of the brake stack 200, an end plate 206 disposed at a second end 208 of the brake stack 200, and a plurality of rotor disks 210 interleaved with a plurality of stator disks 212 positioned intermediate the pressure plate 202 and the end plate 206. In operation, each of the plurality of rotor disks 210 is configured to rotate in accordance with a wheel, such as, for example, the wheel 104 described above with reference to FIG. 1B. A plurality of circumferentially spaced rotor lugs 214 is disposed on each of the plurality of rotor disks 210 and configured to engage the wheel to affect co-rotation between the wheel and the plurality of rotor disks 210. Conversely, the plurality of stator disks 212 is configured to remain stationary relative to the plurality of rotor disks 210 during rotation of the wheel and the plurality of rotor disks 210. A plurality of circumferentially spaced stator lugs 216 is disposed on each of the plurality of stator disks 212 and configured to engage an axle, such as, for example, the axle 102 described above with reference to FIG. 1B to affect stationarity between the axle and the plurality of stator disks 212.

As described above, one or more rams or pistons may axially urge the pressure plate 202, whether directly or through an intermediate object, into forceful engagement with the plurality of rotor disks 210 and the plurality of stator disks 212. The axial compression of the plurality of rotor disks 210, which are rotating with the wheel, and the plurality of stator disks 212, which are stationary relative to the axle, causes friction between the various surfaces comprising the brake stack 200, including a first surface 218 between the pressure plate 202 and a first rotor disk 220 disposed adjacent the pressure plate 202, an Nth surface 222 between the end plate 206 and an Mth rotor disk 224 disposed adjacent the end plate 206, and a plurality of intermediate surfaces 226 between adjacent pairs of the plurality of rotor disks 210 and the plurality of stator disks 212. Here, the number of surfaces, N, is typically equal to twice the number of rotor disks, M. The friction occurring at the various surfaces just defined results in the conversion of kinetic energy (*e.g*., the translational kinetic energy of an aircraft) into heat energy that is ultimately dissipated throughout the brake stack 200.

In various embodiments, each of the plurality of rotor disks 210, such as, for example, the first rotor disk 220, includes a rotor core 230 disposed between a first rotor wear liner 232 and a second rotor wear liner 234. Similarly, each of the plurality of stator disks 212, such as, for example, a first stator disk 236 disposed adjacent the first rotor disk 220, includes a stator core 238 disposed between a first stator wear liner 240 and a second stator wear liner 242. The plurality of intermediate surfaces 226 may thus be more specifically identified as the opposing faces occurring between adjacent pairs of rotor and stator wear liners, such as, for example, the opposing faces occurring between the second rotor wear liner 234 and the first stator wear liner 240. In similar fashion, the first surface 218 between the pressure plate 202 and the first rotor disk 220 may be more specifically identified as the opposing faces occurring between the pressure plate 202 and the first rotor wear liner 232 of the first rotor disk 220, while the Nth surface 222 between the end plate 206 and the Mth rotor disk 224 may be more specifically identified as the opposing faces occurring between the end plate 206 and the second rotor wear liner 234 of the Mth rotor disk 224.

In accordance with various embodiments, the rotor core 230 within each of the plurality of rotor disks 210 is comprised of a carbon-carbon (C/C) material having a non-carbon, high specific heat component interspersed throughout the rotor core 230, where high specific heat component includes any component (typically ceramic) that raises the specific heat of the core material above that of the C/C material alone. For example, in various embodiments, the rotor core 230 may comprise a C/C material that includes a percentage of boron, a boron component, or other material having a high specific heat (*i.e*., a specific heat higher than that of the C/C material alone), including ceramic materials. In various embodiments, the rotor core 230 may comprise a C/C material with a percentage of boron carbide (B₄C) disposed substantially throughout the core. For example, in various embodiments, the rotor core 230 comprises a C/C material with between about one percent (1%) and about thirty percent (30%) of B₄C dispersed throughout the core; in various embodiments, the rotor core 230 comprises a C/C material with between about ten percent (10%) and about twenty percent (20%) of B₄C dispersed throughout the core; and in various embodiments, the rotor core 230 comprises a C/C material with about fifteen percent (15%) of B₄C dispersed throughout the core. In various embodiments, the percentage values recited above may be determined by either volume or weight.

In various embodiments, the process of interspersing the boron carbide (or other high specific heat component) into the C/C material is performed by a slurry casting process. For example, the process starts with a carbon fiber preform that is subsequently densified - *e.g.,* by a chemical vapor infiltration (CVI) process - with carbon. The resulting C/C core component is then interspersed with boron carbide (or B₄C) particulate by a slurry cast infiltration process. In various embodiments, the slurry cast infiltration process comprises preparation of an aqueous B₄C-based slurry and immersing the C/C core into the slurry for a period of time sufficient for the B₄C to infiltrate the core. The B₄C-based slurry may be prepared by mixing B₄C powder in water with appropriate additives, such as wetting agents and dispersants. The B₄C powder may comprise particle sizes from sub-micron up to about 20 microns. The C/C core is then loaded into a vacuum chamber and the B₄C slurry is drawn therein and allowed to infiltrate into and disperse throughout the C/C core.

Broadly speaking, in various embodiments, the boron containing component (or other high specific heat components) may be dispersed into the C/C core by various other methods including chemical vapor infiltration, slurry infiltration or chemical synthesis including through infiltration with boric acid or other boron containing compounds and subsequent reaction with matrix carbon. The various methods for incorporating the ceramic materials are broad, any of which could be used to create the high specific heat matrix material. In various embodiments, the process for incorporating the boron containing component (or other high specific heat components) may be accomplished through a reaction of boric acid or other boron containing components to form boron carbide or other high specific heat boron, or boron carbon containing, compounds.

Various advantages of dispersing B₄C throughout the C/C material comprising the rotor core 230 include the heat capacity Cp (*e.g*., the material specific heat, cₚ multiplied by the material density, p) of the resulting core being increased beyond that of the heat capacity of the C/C material by itself. In various embodiments, a higher heat capacity of the rotor core 230 provides a greater ability to absorb and store the heat energy generated at the first rotor wear liner 232 and at the second rotor wear liner 234 without the attendant increase in temperature that accompanies materials having lower heat capacities. The ability to absorb and store greater amounts of heat energy at lower temperatures enables the rotor core 230 to be run harder and at higher energies for longer periods of time, without increasing the brake temperature and the corresponding rate of oxidation of the brake core, than is possible for core materials having lower heat capacities. In various embodiments, the same or similar material and physical considerations and embodiments just described with respect to the rotor core 230 apply equally to construction of the stator core 238 disposed within each of the plurality of stator disks 212. In various embodiments, the boron carbide material described above comprises a substantial equivalent to B₄C, such as, for example and without limitation, B₁₂C₃.

In accordance with various embodiments, the first rotor wear liner 232 and the second rotor wear liner 234 within each of the plurality of rotor disks 210 is comprised of a ceramic matrix composite (CMC) material. The CMC material may be made using known techniques, such as, for example, silicon melt infiltration (SMI) or chemical vapor infiltration (CVI) of carbonized preforms. In various embodiments, the first rotor wear liner 232 and the second rotor wear liner 234 are made using CVI, which enables deposition of ceramic materials, such as, for example, SiC, B₄C, BN and Si₃N₄, into the matrix during manufacture to tailor the frictional and wear properties of the wear liners. In various embodiments, the first rotor wear liner 232 and the second rotor wear liner 234 have a wear liner thickness 244 that is much less than a core thickness 246 of the rotor core 230. For example, in various embodiments, the liner thickness 244 is between about ten percent (10%) and about fifty percent (50%) of the core thickness 246; in various embodiments, the liner thickness 244 is between about twenty percent (20%) and about forty percent (40%) of the core thickness 246; and in various embodiments, the liner thickness 244 is about thirty percent (30%) of the core thickness 246. In various embodiments, the first rotor wear liner 232 and the second rotor wear liner 234 may be attached to the rotor core 230 using known techniques, such as mechanical rivets and the like, chemical bonding agents or diffusion bonding. In various embodiments, the same or similar material considerations and embodiments just described with respect to the first rotor wear liner 232 and the second rotor wear liner 234 apply equally to construction of the first stator wear liner 240 and the second stator wear liner 242 disposed within each of the plurality of stator disks 212. Compared to other know mechanical techniques for attaching liners to cores, the proposed method offers the advantage of having hard ceramic surfaces on both the core and the liner so as to improve the mechanical durability of the interface. Other approaches that rely on having carbon surfaces on both the core and the lining may not be durable for long life or repeated operation - *e.g.,* carbon materials that exhibit a low bearing strength may not exhibit good durability using mechanical attachment methods. In various embodiments, according to the approaches described herein, both the core and the liner interface surfaces are hard and durable, much like hardening gear teeth in metal components. Further, relatively thin wear liners facilitate achieving adequate densities by CVI which, for thick materials, is difficult to accomplish using typical ceramic CVI technology. The disclosure thus contemplates both cores having high specific heats and ceramic liners optimized for wear using CVI techniques.

In accordance with various embodiments, the brake stack 200, similar to the brake stack 126 described above with reference to FIG. 1B, exhibits several advantages. For example, as previously mentioned, the addition of a percentage of B₄C to the C/C material comprising the rotor core 230 and the stator core 238 raises the heat capacity of the core structures beyond that currently achieved using C/C material alone. The higher heat capacity facilitates use of relatively thin wear liners, which may be constructed of CMC materials using CVI or similar techniques. The rotor core 230 and the stator core 238 comprising the addition of ceramic materials that exhibit relatively high heat capacities to the C/C material, including, for example B₄C, may also be amenable to an oxidation protection system placed onto the core material, with the advantage of providing an oxidation resistant core that is reusable. Advantages of thinner wear liners includes their being more amenable to complete densification of the ceramic matrix into the fiber preform, e.g., using a ceramic CVI process, than are thicker wear liners. Wear liners made from CMC materials also provide for higher coefficients of static and dynamic friction, leading to more effective braking and lower wear rates. In addition, the various components of the brake stack, including the stator disks and the rotor disks, exhibit a high specific heat core component that maintains a hard ceramic coating and that provides both oxidation protection and a hard surface for mechanical integrity and durability. The various components of the brake stack also exhibit a thin ceramic liner that is optimized for wear and also provides a hard surface for mechanical durability.

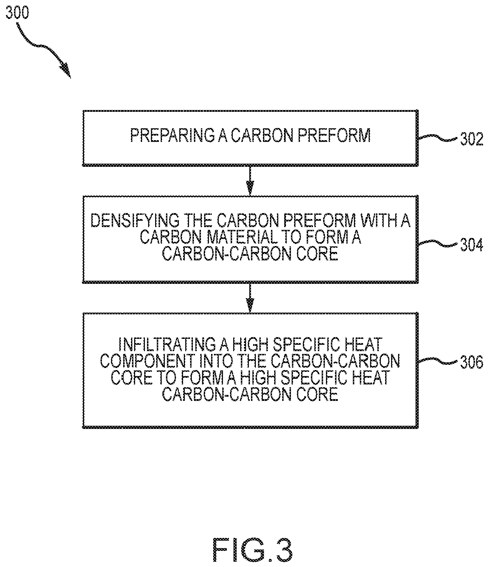

Referring to FIG. 3, a method 300 of forming a brake disk is disclosed. In various embodiments, a first step 302 of the method includes preparing a carbon preform. A second step 304 includes densifying the carbon preform with a carbon material to form a carbon-carbon core. A third step 306 includes infiltrating a high specific heat component into the carbon-carbon core to form a high specific heat carbon-carbon core. In various embodiments, the method further includes attaching a first wear liner and a second wear liner to the high specific heat carbon-carbon core, where the wear liners are formed as described above. In various embodiments, the first wear liner and the second wear liner comprise a ceramic matrix material. In various embodiments, the high specific heat component is a boron component. In various embodiments, the densifying step covers a range including a coating on the fiber preform to near-complete or complete densification of the carbon preform. In addition, the disclosure contemplates fabricating a high specific heat composite core having little to no carbon in the matrix, *e.g.,* a carbon fiber preform with a 100% high specific heat ceramic matrix.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

In various embodiments, system program instructions or controller instructions may be loaded onto a tangible, non-transitory, computer-readable medium (also referred to herein as a tangible, non-transitory, memory) having instructions stored thereon that, in response to execution by a controller, cause the controller to perform various operations. The term "non-transitory" is to be understood to remove only propagating transitory signals *per se* from the claim scope and does not relinquish rights to all standard computer-readable media that are not only propagating transitory signals *per se.*

Finally, it should be understood that any of the above described concepts can be used alone or in combination with any or all of the other above described concepts. Although various embodiments have been disclosed and described, one of ordinary skill in this art would recognize that certain modifications would come within the scope of the invention as defined by the claims. Accordingly, the description is not intended to be exhaustive or to limit the principles described or illustrated herein to any precise form. Many modifications and variations are possible within the scope of the claims.

## Claims

1. A brake disk, comprising:
a core (230, 238) having a carbon-carbon material and a high specific heat component present in the core in a component range of about ten percent to about thirty percent by volume.

2. The brake disk of claim 1, including a first wear liner (232, 240) and a second wear liner (234, 242), both the first wear liner and the second wear liner comprising a ceramic matrix composite material.

3. The brake disk of claim 2, wherein the core has a core thickness and the first wear liner and the second wear liner have a liner thickness that is less than the core thickness, and optionally wherein the liner thickness is within a thickness range of about ten percent to about fifty percent of the core thickness.

4. The brake disk of claim 2 or 3, wherein the high specific heat component present in the core is a boron component, and optionally wherein the boron component comprises B₄C.

5. The brake disk of claim 2, 3 or 4, wherein the brake disk is one of a rotor disk (210) and a stator disk (212).

6. A brake stack, comprising:
a pressure plate (202);
an end plate (206);
a rotor disk (210) disposed between the pressure plate and the end plate, the rotor disk including a rotor core (230) comprising a carbon-carbon material and a high specific heat component; and
a stator disk (212) disposed between the pressure plate and the end plate, the stator disk including a stator core (238) comprising the carbon-carbon material and the high specific heat component.

7. The brake stack of claim 6, wherein the rotor disk comprises a first rotor wear liner (232) comprising a ceramic matrix composite material and a second rotor wear liner (234) comprising the ceramic composite material, and optionally wherein at least one of the pressure plate and the end plate comprises the ceramic matrix composite material.

8. The brake stack of claim 6 or 7, wherein the stator disk comprises a first stator wear liner (240) comprising the ceramic composite material and a second stator wear liner (242) comprising the ceramic matrix composite material.

9. The brake stack of claim 6, 7 or 8, wherein the high specific heat component is a boron component present in the rotor core and in the stator core in a range of about one percent to about thirty percent by volume, and optionally wherein the boron component present in the rotor core comprises boron carbide.

10. The brake disk of claim 4 or 5 or the brake stack of claims 6 to 9, wherein the ceramic matrix composite material comprises a composition having at least one of SiC, B₄C, BN and Si₃N₄.

11. The brake disk or the brake stack of claim 10, wherein the at least one of SiC, B₄C, BN and Si₃N₄ is infiltrated into the ceramic matrix composite material using a chemical vapor infiltration process.

12. A method of forming a brake disk, comprising:
preparing a carbon preform;
densifying the carbon preform with a carbon material to form a carbon-carbon core; and
infiltrating a high specific heat component into the carbon-carbon core to form a high specific heat carbon-carbon core.

13. The method of claim 12, further comprising attaching a first wear liner and a second wear liner to the high specific heat carbon-carbon core.

14. The method of claim 13, wherein the first wear liner and the second wear liner comprise a ceramic matrix material.

15. The method of claim 14, wherein the high specific heat component is a boron component.
